# EUROPEAN PATENT SPECIFICATION

(11) **EP 3 292 982 B1**
(45) Date of publication and mention of the grant of the patent: **01.03.2023**
(21) Application number: 17189768.9
(22) Date of filing: 07.09.2017
(51) Int. Cl.: B29C 48/694, B29C 48/27, B01D 29/21

(54) **FILTER CANDLE TO SEPARATE CONTAMINANTS FROM A PLASTIC MELT**
FILTERKERZE ZUM ABSCHEIDEN VON VERUNREINIGUNGEN AUS EINER KUNSTSTOFFSCHMELZE
BOUGIE FILTRANTE POUR SÉPARER DES CONTAMINANTS À PARTIR D'UNE MATIÈRE PLASTIQUE FONDUE

(30) Priority: 09.09.2016 DE 202016105013 U
(43) Date of publication of application: 14.03.2018
(73) Proprietor: Nordson Corporation, Westlake, OH 44145-1119 (US)
(72) Inventor: Schröder, Christian, 48159 Münster (DE); Wöstmann, Stefan, 48336 Sassenberg (Füchtorf) (DE); Middler, Robert, 48329 Havixbeck (DE); Schämann, Rolf, 48147 Münster (DE)
(74) Representative: Eisenführ Speiser

(56) References cited:
- WO-A1-90/00434
- GB-A- 1 386 143
- US-A- 4 734 188
- US-A1- 2004 206 691
- US-B1- 6 329 625

## Description

The invention relates to a filter candle for separating contaminants from a plastic melt, according to the preamble of claim 1.

In the prior art, filter candles are known which are used for the filtration of plastic melts in order to filter out contaminants within the melt flow and to thus ensure a high product quality of the intermediate and end products produced from the melt flow. Moreover, long service lives of the molding and/or injection-molding tools that further process the plastic melt are to be achieved by the filtration of the plastic melt.

Such filtering devices - designated as filter candles due to their design - have at least one filter element through which a plastic melt flow is directed. The filter element is set up to retain contaminants contained in the melt flow so that these no longer have an influence in the further processing of the plastic melt. Furthermore, the known filter candles comprise a supporting body to support the filter element. Forces that result from the pressure difference in the flow direction of the melt before and after the filter element, act on the filter area of the filter element, and would result in a deformation of the filter element without the supporting body, are absorbed by said supporting body. In order to fix the filter element relative to the supporting body, the edge regions of the filter element are welded to the supporting body, for example. During the filtering process of the plastic melt, the filter element is obstructed little by little by the retained contaminants so that the entire filter candle must be exchanged after a corresponding filtration period. The obstructed filter element of the removed filter candle may be cleaned at high cost, wherein the known filter candle may still be used up to approximately ten times for the filtration of the plastic melt. After a cleaning, care must be taken that the filter medium of the filter element was not damaged during the cleaning process. Special, elaborate tests are performed for this purpose.

For example, a filter candle for the filtration of a plastic melt, which filter candle is inserted into the inside of a filter housing, is known from DE 199 12 433 A1. The filter candle comprises a hollow cylindrical filter element that is supported on a support tube having passages in the support tube wall for the plastic melt.

The disadvantage of the filter candles known from the prior art consists in the complicated cleaning of the obstructed filter element before a possible reuse. Such a cleaning may take place with chemical solvents or thermal methods in order to extract the plastic from the filter candle. Normally, this occurs in multiple cleaning cycles. In addition, a removal of the contaminants from the filter element, for example by means of ultrasonic cleaning, would then still be required. After a cleaning has been performed, it must then still be analyzed respectively with different testing methods, whether the filter media have been cleaned efficiently and without damage. This also affects the production costs of the products produced from the plastic melt.

US 2004/206691 A1 relates to a filter candle with a hollow core tube, an elongated pleated mesh pack and a cylindrical protective sheath which can be assembled such that the components are arranged coaxially to each other.

GB 1 386 143 A shows a filter set for filtering contaminants from a plastic melt. The filter set comprises an outer supporting basket into which a removable screening basket can be inserted.

US 4,734,188 A1 relates to a filter assembly for hot melt adhesives. The filter assembly comprises an annular inner core which is encased by a metal filter screen. Around the outside surface of the filter screen a spacer is wrapped.

The invention is therefore based on the task of providing a filter candle of the aforementioned type that allows for a simplified cleaning and also a longer useful life of the filter element. In particular, at least one alternative to the known filter candles is to be achieved.

The invention achieves its underlying task by means of a filter candle to separate contaminants from a plastic melt, having the features according to claim 1. In particular, the internal supporting body or the at least one external supporting body has an abutment part for the respective other supporting body for longitudinal alignment of the supporting bodies to each other, wherein a clamping ring and an attachment part with a thread are provided, said attachment part interacting with said clamping ring, wherein the attachment part is accommodated on one of the supporting bodies in a screwable manner and is set up to fix the respective other supporting body to the one supporting body, wherein the filter element, with its surfaces facing away from one another, rests on the internal supporting body or the at least one external supporting body, and wherein during the filtration process, said plastic melt flows with an essentially radially directed flow direction from the outside through passages in the external supporting body through the filter element and through passages of the internal supporting body and during the backwash process, the plastic melt flows in directions opposite the flow directions in order to clean the filter element.

The invention hereby utilizes the knowledge that, with the aid of the at least one additional supporting body, supporting forces may act from the side of the filter element on preferably multiple surface regions of the filter element against which the plastic melt typically flows during the filtration process. Therefore, the filter element may be backwashed by means of the melt flow counter to the typical filtration direction, without the filter candle needing to be uninstalled for cleaning. At least one additional supporting body or multiple additional supporting bodies is or are provided that preferably is or are arranged or designed such that the filter element is accommodated and/or supported on multiple surface regions on the side facing away from the supporting body. It is thus avoided that the filter element is deformed and/or displaced counter to its typical filtration direction. The filter medium used to form the filter element remains undamaged. Contaminants located in the filter element are discharged from the filter element in a simplified manner via the melt flow flowing counter to the typical filtration direction. Due to the possibility of backwashing that is achieved by the invention, the time intervals between the standard cleaning processes may be markedly increased, whereby the service life of a filter candle according to the invention is extended multiple times in comparison to a standard filter candle. For example, a situation may arise in which only the filter medium is exchanged while the supporting body/attachment part and the mounting device remain in the system longer.

In a preferred embodiment of the invention, the at least one additional supporting body has multiple retention struts which are preferably arranged in parallel with and at a distance from one another. The retention struts are preferably arranged with uniform distribution across the surface region of the filter element, on the side of the filter element which faces away from the side that is supported by the supporting body during the regular filtration process.

According to the invention, it is provided that the supporting body is an internal supporting body, and that the at least one additional supporting body is an external supporting body with passages for the melt flow. The forces acting on the filter element during the backwash process may be safely absorbed by the external supporting body, which is preferably a single piece. The external supporting body may be designed as a type of supporting grid with retention struts or bars extending transversally and longitudinally relative to one another. The external supporting body preferably has dimensions adapted to the external dimensions of the filter element, whereby preferably a uniform force introduction takes place across the entire surface region of the filter element during the backwash process. The internal supporting body, which is preferably designed as a hollow body, has passages for the melt flow to be filtered, at least in one surface region. The filter element has such a size that at least the region of the internal supporting body, whose wall is provided with passages for the plastic melt, is covered.

The external supporting body is preferably designed as a hollow body having passages in a wall region, wherein the internal supporting body and the filter element are arranged in the cavity of the external supporting body. A compact embodiment of the filter candle according to the invention is achieved with the design of the external supporting body as a hollow body, wherein the internal supporting body and the filter element are arranged inside the cavity of said external supporting body. The internal and external supporting body, designed as hollow bodies, preferably have passages in the wall regions that preferably extend congruently relative to one another. Relatively large surface regions are thereby set up for the passage of the plastic melt flow. The pressure loss of the filter candle is thereby low. The plastic melt preferably flows from the outside inward through the filter body according to the invention during the regular filtration process, in contrast to which the backwash process takes place from the inside outward.

According to a preferred embodiment of the invention, the internal supporting body is designed similar to the external supporting body, wherein the internal supporting body preferably has a cylindrical external shape and the external supporting body preferably has a cylindrical internal shape, wherein the filter element is arranged in a gap between the internal supporting body and the external supporting body. What is presently to be understood by a cylindrical shape is a general cylindrical shape so that the internal supporting body and the external supporting body may have different cross sections. According to a preferred embodiment of the invention, the internal and external supporting body are designed as a hollow cylinder. The filter element is arranged within the gap between the internal and external supporting body, wherein the filter element is preferably designed to be circumferential in the gap and as a kind of filter tube, given supporting bodies designed as hollow cylinders.

In another preferred development of the invention, the internal and external supporting body are arranged coaxially, whereby a uniform gap is formed between the internal shell surface of the external supporting body and the external shell surface of the internal supporting body. The uniform gap in which the filter element is preferably designed or arranged circumferentially with a uniform material thickness produces a uniform filter function of the filter candle according to the invention. The internal and external supporting body have a uniform wall thickness at least in the wall regions having the passages for the plastic melt passing through.

According to the invention, the filter element, with its surfaces facing away from one another, preferably abuts the internal and external supporting body. The filter element in particular completely fills the gap between the internal shell surface of the external supporting body and the external shell surface of the internal supporting body. It is thus brought about that the filter element already directly abuts the respective associated wall surface of the respective supporting body during the regular filtration process, and preferably also during the backwash process. Relative movements between the supporting bodies and the filter element arranged between them are thus counteracted. The forces acting on the filter element are thereby directly absorbed by the respective associated wall surfaces, whereby an unwanted deformation of the filter element is counteracted. An especially simple installation and deinstallation of the filter medium is provided if it is conical in design, comparable to the design of Morse cones in the field of machine tool design.

The internal and external supporting bodies preferably have an external or internal shape, selected from the group consisting of polygonal or star shapes. A polygonal or star-shaped embodiment especially has the advantage that the surface of the supporting body through which the melt flow passes is increased in comparison to an internal or external supporting body designed as a hollow cylinder. The internal and external supporting body preferably have a uniform wall thickness so that the respective internal and external shell surface of the internal and external supporting body are designed similar to one another. In addition, a uniform pressure loss over the entire periphery of a respective supporting body is achieved by means of the uniform wall thicknesses on the supporting bodies on the wall regions with their passages for the melt flow. A uniform flow behavior of the melt flow over the entire circumference of the filter candle is thus preferably ensured.

In a preferred embodiment of the invention, the filter element essentially has the shape of a tube body, wherein the filter element is preferably pleated in the circumferential direction. The filter element is thus preferably placed in folds in the circumferential direction so that the filter area of the filter element itself is increased between the internal and external supporting body of the filter candle. Given the same external dimensions of the filter candle, an improved filtration rate may thereby be achieved given an unchanged volume flow of the melt flow passing through the filter candle, or an increased volume flow may be achieved given an unchanged filtration quality. By means of the pleating, i.e. the folding of the filter element in the circumferential direction, the filtering process can be additionally improved without enlarging the external dimensions of the filter candle. What is presently understood by a pleated filter element is a filter element that has at least one area having surface regions extending at an angle relative to one another. However, the surface regions do not come to rest one on the other in this case.

According to a development of the invention, it is provided that the internal supporting body on its external wall surface associated with the filter element, and/or the external supporting body on its internal wall surface facing toward the filter element, has locking elements extending between the folds of the pleated filter element. With the aid of the locking elements, it is brought about that individual folds of the pleated filter element are held in a fixed alignment relative to one another due to the pressure difference before and after the filter element during operation. A placement or folding of the filter areas of the filter medium one on the other is therefore counteracted. The locking elements ensure the lasting functionality of the filter candle designed according to the invention. The locking elements are preferably situated radially inward on the internal shell surface of the external supporting body, and essentially radially outward on the external shell surface of the internal supporting body. In one embodiment of the invention, the locking elements are designed in the manner of a retaining pin, wherein one or more retaining pins project into each fold of the filter element. Alternatively, in another embodiment of the invention, the locking elements are designed as retention bars which are arranged on the wall surfaces of the internal and external supporting body, extending essentially in parallel to the center axis.

In a preferred alternative embodiment of the invention, the internal and external supporting body are pleated in the circumferential direction depending on the external or internal shape of the internal and external supporting body used to form the filter candle, wherein the filter element is arranged in a corrugated gap between the supporting bodies. In comparison to the pleated filter element, the pleated design of the internal and external supporting body represents an alternative possibility of designing an increased filter area on the filter candle according to the invention. The time period between the backwash processes which must be performed may therefore be extended so that as a result, the operationally reliable long-term functioning of the filter element in use can be further improved. The filter element used between the internal and external pleated supporting body may have surface regions adapted to the shape of the internal and external supporting body, or may be additionally pleated, i.e. placed in folds, in an alternative embodiment of the invention.

According to an embodiment of the invention, it is provided that the internal and external supporting body are coupled with one another via a reversible releasable connection, and the filter element is designed to be exchangeable. The filter element on the filter candle designed according to the invention, which filter element is no longer capable of being cleaned after a predetermined service life, may then be exchanged on its own in a simplified manner. Contaminated filter elements may additionally be exchanged without cleaning. On the filter candle according to the invention, only the components that are actually subject to wear are thus exchanged. For this purpose, the internal and external supporting body can be coupled with and decoupled from one another via a connection, preferably a screw connection, that can be established and also released again arbitrarily often as needed. The internal and external supporting body are in this case fixed to one another in a predetermined alignment such that the required gap for the filter element is respectively formed between the internal and external supporting body. The internal and external supporting body are preferably arranged coaxially to one another. In addition, an axial alignment or fixing of the external supporting body relative to the internal supporting body takes place. A sealing of the filter element at both of its ends in order to prevent the plastic melt from flowing around the filter element also takes place due to the prestressing of the assembly.

In a preferred embodiment of the invention, the internal supporting body of the filter candle is accommodated within a housing of a plastic-processing machine or device via an attachment segment formed on said internal supporting body. In the housing of the machine or device, a flow path is formed for the plastic melt that is directed through the filter candle and to be filtered. The attachment segment is preferably provided at the outlet region of the filter candle, wherein the attachment segment preferably comprises a connecting pipe having a thread, wherein the internal diameter of the connecting pipe defines the diameter of the outlet region.

In an alternative embodiment, the external supporting body instead of the internal supporting body is attached to the housing of the plastic-processing machine or device.

According to the invention, the internal or external supporting body has an abutment part for the respective other supporting body, with which abutment part the alignment is defined in the longitudinal direction of the supporting bodies relative to one another. With the abutment part, the supporting bodies are especially aligned axially as well as radially relative to one another such that the wall regions with the passages are preferably arranged congruently or in alignment with one another, or that an essentially uniform gap exists between the supporting bodies. A flange body preferably having a centering recess for the movable supporting body is used as an abutment part for the movable one of the two supporting bodies, wherein the flange body is formed as one part with the internal or external supporting body in one embodiment of the invention. In another embodiment, the supporting body and the abutment part are formed as separate components.

According to the invention, a clamping ring and an attachment part interacting with the clamping ring are provided with a thread, wherein the attachment part is accommodated on one of the supporting bodies in a screwable manner and is set up to fix the respective other supporting body to the one supporting body. The clamping ring and attachment part are especially accommodated in a screwable manner on the supporting body that has the abutment part for fixing the respective movable supporting body. The abutment part for the movable body and the clamping ring, as well as the attachment part interacting with the clamping ring, are preferably arranged at opposite ends of the supporting bodies that are to be aligned relative to one another. According to one embodiment of the invention, the abutment part is associated with the end of the internal supporting body on which is arranged the outlet region for the melt flow during the regular filtration process. The clamping ring and the attachment part are preferably designed as separate components, whereby upon screwing on the attachment part, the clamping ring is preferably held in a rotationally fixed manner on the external supporting body to be fixed. The clamping ring additionally provides the necessary force to seal the edges of the filter element. In one embodiment, the attachment part has a tool shoulder for placement of a tool, wherein the tool shoulder is preferably designed as a width across flats.

The attachment part preferably has a conical segment that projects into the free internal space of the supporting body, wherein the conical segment preferably extends across at least approximately one quarter of the length of the internal supporting body from one end into the free internal space. The conical segment within the free internal space in the supporting body ensures that a dead space in which the plastic melt does not flow as directed is avoided or reduced within the free flow cross section. The conical segment in the internal space produces a uniform flow of the plastic melt to be filtered through all regions inside the filter candle toward the exit. In one embodiment of the invention, the conical segment extends across at least approximately one quarter of the total length of the wall region of the internal supporting body that is provided with passages.

In a particularly preferred embodiment of the invention, the attachment part is designed as a tie rod which extends from one end of the internal supporting body to and through the other end. In practice, given backwashing of highly viscous plastic melts, very high pressure loads may occurthat inevitably may result in a longitudinal extension of the filter element and of the supporting body. It is advantageous to absorb these forces via a tie rod, and to not design the supporting bodies with larger wall thicknesses. Higher flow resistances are thereby avoided during the filtration process and the backwash process. The attachment part, designed as a tie rod, preferably has a conical shape over its entire length.

Moreover, in an additional aspect, the invention relates to a plastic-processing machine or device having a housing and a flow path for a plastic melt flowing within the housing, wherein a filter candle for the filtration of the flowing plastic melt is arranged within the flow path.

The invention also achieves the underlying task in the plastic-processing machine or device according to the invention, in that the filter candle arranged in the flow path is designed according to a preferred embodiment described above, and therefore can be backwashed. Such a backwashable filter candle according to the invention may be cleaned occasionally in a simple manner via a backwash process, without being removed from the housing of the plastic-processing machine or device. Thus, the inflow area of the filter element is especially cleaned and blockages are remedied so that the filter candle has extended service life and the plastic-processing machine may be operated over a longer time period without periodic interruptions. The filter candle according to the invention is preferably firmly connected with the housing of the machine or device via an attachment segment preferably having a thread, which attachment segment is formed on the internal or external supporting body.

The preferred embodiments or developments described with regard to the filter candle according to the invention are also simultaneously preferred embodiments or designs of the plastic-processing machine or device according to the invention for the production of a plastic part from a plastic melt.

In an additional aspect, the invention relates to the use of a backwashable filter candle according to any of the preferred embodiments described above for the separation of contaminants from a plastic melt flowing through a plastic-processing machine or device.

In the following, the invention is described in greater detail with reference to attached figures using various exemplary embodiments. Shown are:
- Fig. 1:: a perspective view of a first exemplary embodiment of a filter candle according to the invention, in an exploded view;
- Fig. 2:: a view of the filter candle according to Fig. 1, in longitudinal section;
- Fig. 3:: a view of another embodiment of the filter candle according to the invention, in cross section;
- Fig. 4:: a perspective view of a third exemplary embodiment of a filter candle according to the invention;
- Fig. 5:: a view of the filter candle according to Fig. 4, in longitudinal section;
- Fig. 6:: a perspective view of a fourth exemplary embodiment of a filter candle according to the invention, in an exploded view, and
- Fig. 7:: a view of the filter candle according to Fig. 6, in cross section.

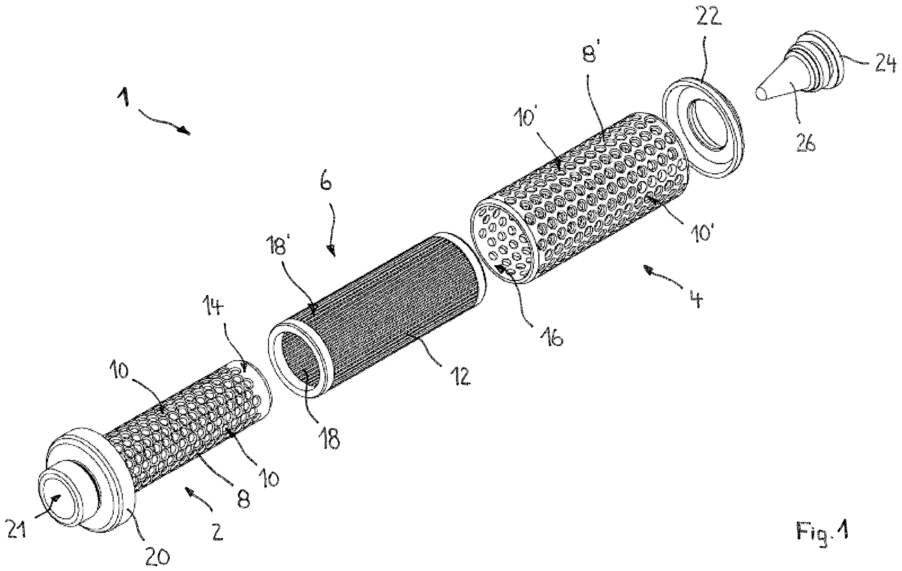

Fig. 1 shows a filter candle 1 that has an internal supporting body 2 and an external supporting body 4 for a filter element 6 arranged between the internal and external supporting body 2, 4. The internal supporting body 2 and the external supporting body 4 are preferably designed as hollow cylinders 8, 8' which have a plurality of passages 10, 10' in their walls. The filter element 6 has a filter medium 12 covering the passages 10, 10' on the internal and external supporting body 2, 4, which filter medium 12 is arranged in the form of a filter tube between the external wall surface 14 of the internal supporting body 2 and the internal wall surface 16 of the external supporting body 4. The filter element 6 has an internal shell surface 18 and an external shell surface 18' which rest on the wall surfaces 14, 16 of the supporting bodies 2, 4.

Arranged on the internal supporting body 2 is a flange-like stop part 20 for the filter element 6 and the external supporting body 4, with which stop part 20 at least the alignment of the filter element 6 in the longitudinal direction and of the external supporting body 4 relative to the internal supporting body 2 takes place. The stop part 20 is arranged at the end of the internal supporting body 2 that has an outlet 21 for the melt flow during the regular filtration process. Arranged at the opposite end of the internal supporting body 2 is a clamping ring 22 and an attachment part 24 interacting with the clamping ring 22, which attachment part 24 is screwed together with the opposite end of the internal supporting body 2. The filter element 6 and the external supporting body 4 are fixed between the abutment part 20 and the clamping ring 22. An alignment of the supporting bodies 2, 4 and the filter element 6 in the radial direction relative to one another likewise takes place with the abutment part 20 and the clamping ring 22.

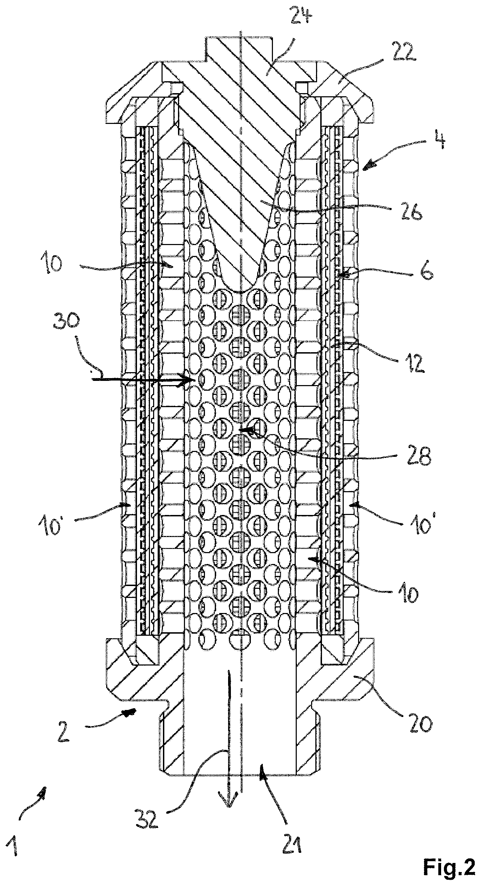

Fig. 2 shows the filter candle 1 from Fig. 1 in longitudinal section. As Fig. 2 illustrates, the internal supporting body 2, the external supporting body 4 and the filter element arranged between the supporting bodies 2, 4 are arranged coaxially. The passages 10, 10' in the supporting bodies 2, 4 are respectively completely covered by the filter medium 12 of the filter element 6. The attachment part 24 has a conical segment 26 that seals the end of the internal supporting body 2 that is situated opposite the outlet 21 for the plastic melt and protrudes into the free, internal cavity 28 of the internal supporting body 2. The conical segment 26 ensures that no or minimal no-flow zones arise in the cavity 28 and that the melt is thus supplied to the outlet 21 in a targeted manner.

During the filtration process of the plastic melt, said plastic melt flows with an essentially radially directed flow direction 30 from the outside through the passages 10' in the external supporting body 4 through the filter element 6 and through the passages 10 of the internal supporting body 2 into the free cavity 28. From there, the plastic melt flows with an essentially axially directed flow direction 32 from the free cavity 28 via the outlet 21 on the internal supporting body 2 out of the filter candle 1. During the backwash process, the plastic melt flows in directions opposite the flow directions 32, 30 in order to clean the filter element 6.

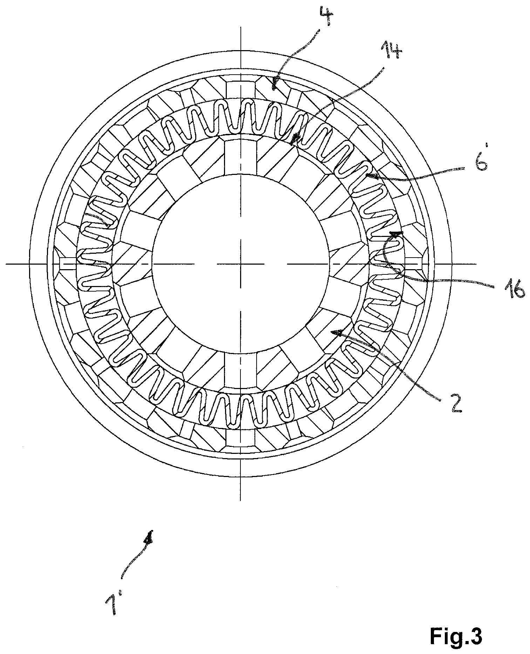

Shown in Fig. 3 is an additional exemplary embodiment of a filter candle 1' which has a filter element 6' arranged between the external wall surface 14 of the internal supporting body 2 and the internal wall surface 16 of the external supporting body 4, which filter element 6' is pleated in the circumferential direction. The filter element 6' has pleats in the circumferential direction, whereby its filter area is increased in comparison to the filter element 6 shown in Fig. 2.

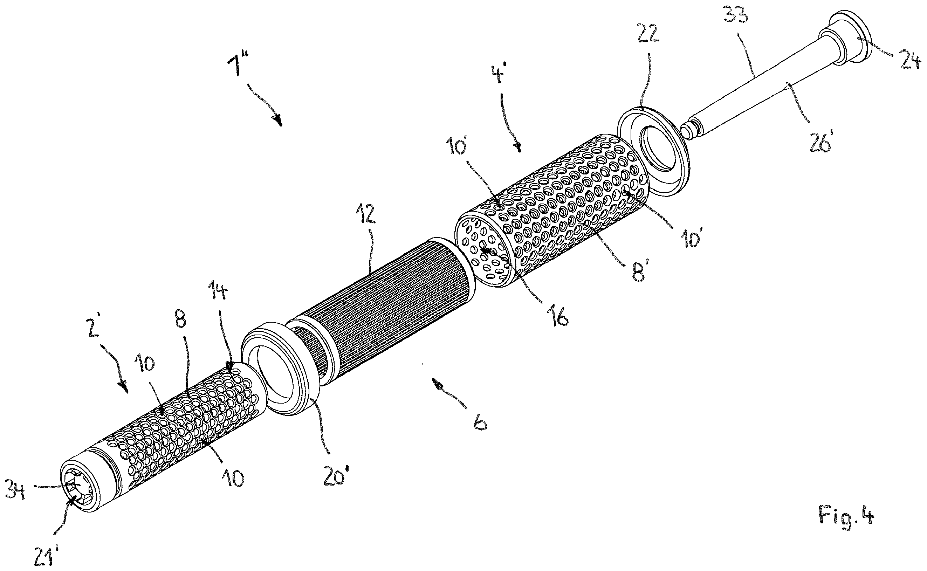

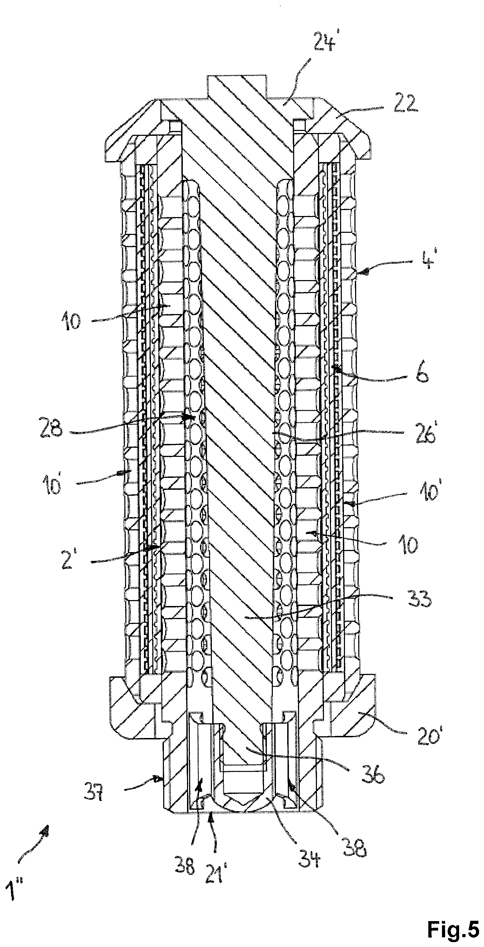

Fig. 4 and 5 show a third embodiment of a filter candle 1" which has an internal supporting body 2', [sic] an external supporting body 4'. The filter element 6 designed as a tube body is arranged between the external wall surface 14 of the internal supporting body 2' and the internal wall surface 16 of the external supporting body 4', which are designed as hollow cylinders 8, 8'. The filter candle 1" furthermore comprises an abutment part 20' that is designed separate from the internal supporting body 2'. The abutment part 20' can be arranged and attached at the end of the internal supporting body 2' having the outlet 21' for the plastic melt. Via the abutment part 20', the filter element 6 and the external supporting body 4' in the embodiment shown here are also aligned and fixed in the axial and radial direction and sealed at the ends. At the end opposite the outlet 21', a clamping ring 22 is again provided that, in the shown embodiment, fixes the filter element 6 and the external supporting body 4' via an attachment part 24' having a tie rod 33. Similar to the attachment part 24 from Fig. 2, the tie rod 33 which extends up to the end having the outlet 21' has a conical segment 26'.

As Fig. 5 furthermore shows, a screw-in bushing 34 for a threaded pin 36 arranged at the end of the tie rod 33 is also provided in the region of the outlet 21'. A plurality of passage channels 38 via which the plastic melt can flow out of the cavity 28 inside the supporting body 2 are formed between an attachment segment 37 bordering the outlet 21' and the screw-in bushing 34.

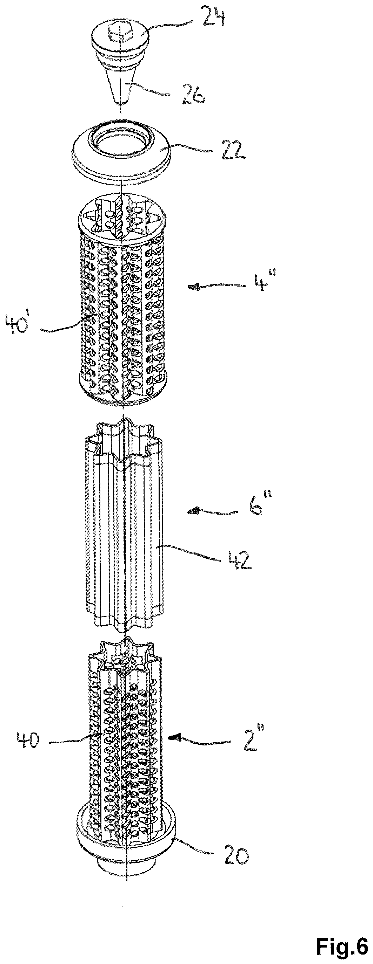

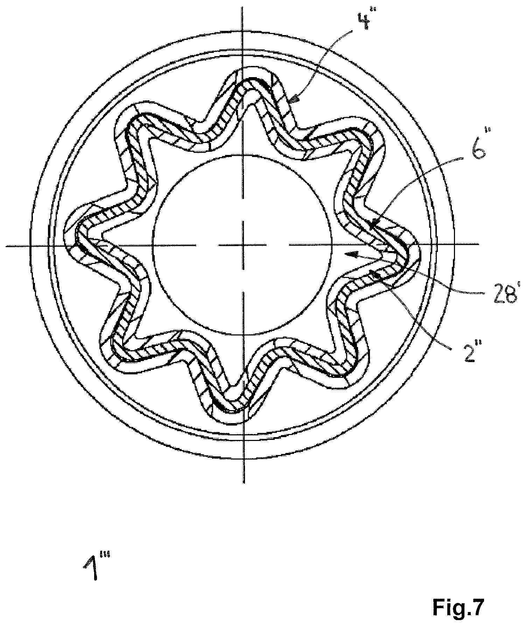

A fourth exemplary embodiment of a filter candle 1‴ according to the invention is depicted in Fig. 6 and 7. The filter candle 1‴ has an internal supporting body 2", an external supporting body 4", and a filter element 6", wherein the supporting body 2", 4" and the filter element 6" are designed as hollow bodies and have body walls 40, 40', 42 that are pleated, i.e. folded, in the circumferential direction. In the shown embodiment, the supporting bodies 2", 4" and the filter element 6" have a star shape in cross section. An increased filter area for the plastic melt to be freed of contaminants is produced by the folded embodiment.

The external supporting body 2" and the filter element 6" are again aligned via the abutment part 20 arranged or attachable in the internal supporting body 2" and via the clamping ring 22 as well as the attachment part 24 in the axial and radial direction relative to the internal supporting body 2", and/or are attached or arrested on the latter. The attachment part 24 has a conical segment 26 that projects in segments into the cavity 28' of the internal supporting body 2". Identical components are designated with the same reference numbers.

### Reference symbol list

- 1, 1', 1", 1‴: Filter candle
- 2, 2', 2": Internal supporting body
- 4, 4', 4": External supporting body
- 6, 6', 6": Filter element
- 8, 8': Hollow cylinder
- 10, 10': Passage
- 12: Filter medium
- 14, 14': External wall surface
- 16, 16': Internal wall surface
- 18, 18': Shell surface
- 20, 20': Abutment part
- 21, 21': Outlet
- 22: Clamping ring
- 24, 24': Attachment part
- 26, 26': Conical segment
- 28, 28': Cavity
- 30, 32: Flow direction
- 33: Tie rod
- 34: Screw-in bushing
- 36: Threaded pin
- 37: Attachment segment
- 38: Passage channel
- 40, 40': Body wall
- 42: Body wall

## Claims

1. Filter candle (1, 1', 1", 1‴) to separate contaminants from a plastic melt, having
- at least one filter element (6, 6', 6") through which a melt flow can be directed and which is set up to retain contaminants contained in the melt flow, and
- a supporting body (2, 2', 2") to support the filter element (6, 6', 6"), in the form of a hollow body which has a wall region having multiple passages for the melt flow, and
- at least one additional supporting body (4, 4', 4") is associated with the filter element (6, 6', 6") on the side of said filter element that faces away from the supporting body (2, 2', 2"),
which supporting body (4, 4', 4") is set up to act on surface regions of the filter element (6, 6', 6") and/or to accommodate them such that the filter element (6, 6', 6") is configured to be backwashed via the melt flow flowing counter to the typical filtration direction,
wherein the supporting body (2, 2', 2") is an internal supporting body, and the at least one additional supporting body (4, 4', 4") is an external supporting body, with passages (10, 10') for the melt flow
, wherein during the filtration process, said plastic melt flows in an essentially radially directed flow direction (30) from the outside through passages (10, 10') in the external supporting body (4, 4', 4") through the filter element (6) and through passages (10, 10') of the internal supporting body (2, 2', 2") and during the backwash process, the plastic melt flows in directions opposite the flow directions in order to clean the filter element (6), **characterized in that** the internal supporting body (2, 2', 2") or the at least one external supporting body (4, 4', 4") has an abutment part (20, 20') for the respective other supporting body for longitudinal alignment of the supporting bodies (2, 2', 2", 4, 4', 4") to each other,
wherein a clamping ring (22) and an attachment part (24, 24') with a thread are provided,
said attachment part interacting with said clamping ring, wherein the attachment part (24, 24') is accommodated on one of the supporting bodies (2, 2', 2", 4, 4', 4") in a screwable manner and is set up to fix the respective other supporting body (2, 2', 2", 4, 4', 4") to the one supporting body,
wherein the filter element, with its surfaces facing away from one another, rests on the internal supporting body (2, 2', 2") or the at least one external supporting body (4, 4', 4").

2. Filter candle according to claim 1,
**characterized in that** the external supporting body (4, 4', 4") is designed as a hollow body having passages in a wall region, wherein the internal supporting body (2, 2', 2") and the filter element (6, 6', 6") are arranged in the cavity of the external supporting body (4, 4', 4").

3. Filter candle according to claim 1 or 2,
**characterized in that** the external supporting body (4, 4', 4") is designed similar to the internal supporting body (2, 2', 2"), wherein the internal supporting body preferably has a cylindrical external shape and the external supporting body (4, 4', 4") preferably has a cylindrical internal shape, wherein the filter element (6, 6', 6") is arranged in a gap between the internal and the external supporting body (2, 2', 2", 4, 4', 4").

4. Filter candle according to at least one of the claims 1 through 3,
**characterized in that** the internal and the external supporting body (2, 2', 2", 4, 4', 4") are arranged coaxially.

5. Filter candle according to at least one of the claims 1 through 4,
**characterized in that** the internal and the external supporting bodies have an external or internal shape, selected from the group consisting of polygonal or star shapes.

6. Filter candle according to at least one of the claims 1 through 5,
**characterized in that** the filter element (6, 6', 6") essentially has the shape of a tube body, wherein the filter element (6') is preferably pleated in the circumferential direction.

7. Filter candle according to claim 6,
**characterized in that** the internal supporting body (2, 2', 2") on its external wall surface facing toward with the filter element (6'), and/or the external supporting body (4, 4', 4") on its internal wall surface facing toward the filter element (6'), has locking elements extending between the folds of the pleated filter element (6').

8. Filter candle according to at least one of the claims 1 through 7,
**characterized in that** the internal and the external supporting body (2", 4") are pleated in the circumferential direction, wherein the filter element (6") is arranged in a corrugated gap between the supporting bodies (2", 4").

9. Filter candle according to at least one of the claims 1 through 3,
**characterized in that** the internal and external supporting bodies (2, 2', 2", 4, 4', 4") are coupled with one another via a reversible releasable connection, and the filter element (6, 6', 6") is designed to be exchangeable.

10. Filter candle according to any of the claims 1 to 9,
**characterized in that** the attachment part has a conical segment (26, 26') that projects into the free internal space of the internal supporting body (2, 2', 2"), wherein the conical segment (26, 26') preferably extends across at least approximately ¼ of the length of the internal supporting body (2, 2', 2") from one end into the free cavity (28).

11. Filter candle according to any of the claims 1 to 10,
**characterized in that** the attachment part is a tie rod that extends through the free cavity of the internal supporting body from one end of the filter candle to the other end.

12. Plastic-processing machine or device, having
- a housing and
- a flow path for a plastic melt flowing within the housing, **characterized in that** a backwashable filter candle (1, 1', 1", 1‴) according to any of the claims 1 through 11 is arranged in the flow path.

13. Use of a backwashable filter candle (1, 1', 1", 1‴) according to any of the claims 1 through 11 to separate contaminants from a plastic melt in a plastic-processing machine or device.

## Patentansprüche

1. Filterkerze (1, 1', 1", 1‴) zum Abscheiden von Verunreinigungen aus einer Kunststoffschmelze, aufweisend
- wenigstens ein Filterelement (6, 6', 6"), durch das ein Schmelzestrom hindurchleitbar ist, und das dazu eingerichtet ist, im Schmelzestrom enthaltene Verunreinigungen zurückzuhalten, und
- einen Stützkörper (2, 2', 2") zum Stützen des Filterelements (6, 6', 6") in Form eines Hohlkörpers, welcher einen Wandbereich mit mehreren Durchlässen für den Schmelzestrom aufweist, und
- wenigstens einen zusätzlichen Stützkörper (4, 4', 4"), der dem Filterelement (6, 6', 6") auf der vom Stützkörper (2, 2', 2") abgewandten Seite des Filterelements zugeordnet ist, welcher Stützkörper (4, 4', 4") dazu eingerichtet ist, auf Flächenbereiche des Filterelements (6, 6', 6") einzuwirken und/oder diese aufzunehmen, sodass das Filterelement (6, 6', 6") durch den entgegen der typischen Filtrationsrichtung fließenden Schmelzestrom rückgespült wird,
wobei der Stützkörper (2, 2', 2") ein innerer Stützkörper ist, und der wenigstens eine zusätzliche Stützkörper (4, 4', 4") ein äußerer Stützkörper mit Durchlässen (10, 10') für den Schmelzestrom ist, wobei die Kunststoffschmelze während des Filtrationsprozesses in einer im Wesentlichen radial gerichteten Strömungsrichtung (30) von außen durch die Durchlässe (10, 10`) im äußeren Stützkörper (4, 4', 4") durch das Filterelement (6) und durch die Durchlässe (10, 10') des inneren Stützkörpers (2, 2', 2") fließt, und der Kunststoff-Schmelzestrom während des Rückspülvorgangs in die entgegengesetzte Strömungsrichtung fließt, um das Filterelement (6) zu reinigen,
**dadurch gekennzeichnet, dass** der innere Stützkörper (2, 2', 2") oder der wenigstens eine äußere Stützkörper (4, 4', 4") ein Anlageteil (20, 20') für den jeweils anderen Stützkörper aufweist, mit dem die Längsausrichtung der Stützkörper (2, 2', 2", 4, 4', 4") zueinander definiert wird, wobei ein Klemmring (22) und ein Befestigungsteil (24, 24`) mit einem Gewinde vorgesehen sind, wobei das Befestigungsteil mit dem Klemmring zusammenwirkt, wobei das Befestigungsteil (24, 24`) an einem der Stützkörper (2, 2', 2", 4, 4', 4") schraubbar aufgenommen ist und dazu eingerichtet ist, den jeweils anderen Stützkörper (2, 2', 2", 4, 4', 4") zu dem einen Stützkörper zu fixieren,
wobei das Filterelement mit seinen voneinander abgewandten Flächen am inneren Stützkörper (2, 2', 2") oder dem wenigstens einen äußeren Stützkörper (4, 4', 4") anliegt.

2. Filterkerze nach Anspruch 1,
**dadurch gekennzeichnet, dass** der äußere Stützkörper (4, 4', 4") als Hohlkörper mit Durchlässen in einem Wandbereich ausgebildet ist, wobei der innere Stützkörper (2, 2', 2") und das Filterelement (6, 6', 6") im Hohlraum des äußeren Stützkörpers (4, 4', 4") angeordnet sind.

3. Filterkerze nach Anspruch 1 oder 2,
**dadurch gekennzeichnet, dass** der äußere Stützkörper (4, 4', 4") ähnlich dem inneren Stützkörper (2, 2', 2") ausgebildet ist, wobei der innere Stützkörper bevorzugt eine zylindrische äußere Form und der äußere Stützkörper (4, 4', 4") bevorzugt eine zylindrische innere Form aufweisen, wobei das Filterelement (6, 6', 6") in einem Spalt zwischen dem inneren und dem äußeren Stützkörper (2, 2', 2", 4, 4', 4") angeordnet ist.

4. Filterkerze nach mindestens einem der Ansprüche 1 bis 3,
**dadurch gekennzeichnet, dass** der innere und äußere Stützkörper (2, 2', 2", 4, 4', 4") koaxial angeordnet sind.

5. Filterkerze nach mindestens einem der Ansprüche 1 bis 4,
**dadurch gekennzeichnet, dass** der innere und äußere Stützkörper eine äußere bzw. innere Form aufweist, ausgewählt aus der Gruppe bestehend aus mehreckig oder sternförmig.

6. Filterkerze nach mindestens einem der Ansprüche 1 bis 5,
**dadurch gekennzeichnet, dass** das Filterelement (6, 6', 6") im Wesentlichen die Form eines Schlauchkörpers aufweist, wobei das Filterelement (6`) vorzugsweise in Umfangsrichtung plissiert ist.

7. Filterkerze gemäß Anspruch 6,
**dadurch gekennzeichnet, dass** der innere Stützkörper (2, 2', 2") auf seiner dem Filterelement (6`) zugewandten äußeren Wandfläche und/oder der äußere Stützkörper (4, 4', 4") auf seiner dem Filterelement (6`) zugewandten inneren Wandfläche sich zwischen die Falten des plissierten Filterelements (6`) erstreckende Arretierelemente aufweist.

8. Filterkerze nach mindestens einem der Ansprüche 1 bis 7,
**dadurch gekennzeichnet, dass** der innere und äußere Stützkörper (2", 4") in Umfangsrichtung plissiert sind, wobei das Filterelement (6") in einem gewellten Spalt zwischen den Stützkörpern (2", 4") angeordnet ist.

9. Filterkerze nach mindestens einem der Ansprüche 1 bis 3,
**dadurch gekennzeichnet, dass** der innere und äußere Stützkörper (2, 2', 2", 4, 4', 4") über eine reversibel lösbare Verbindung miteinander gekoppelt und das Filterelement (6, 6', 6") austauschbar ausgebildet sind.

10. Filterkerze nach mindestens einem der Ansprüche 1 bis 9,
**dadurch gekennzeichnet, dass** das Befestigungsteil einen kegelförmigen Abschnitt (26, 26`) aufweist, der in den freien Innenraum des inneren Stützkörpers (2, 2', 2") vorsteht, wobei der kegelförmige Abschnitt (26, 26`) sich bevorzugt über wenigstens etwa ¼ der Länge des inneren Stützkörpers (2, 2', 2") von einem Ende aus in den freien Hohlraum (28) erstreckt.

11. Filterkerze nach einem der Ansprüche 1 bis 10,
**dadurch gekennzeichnet, dass** das Befestigungsteil eine Zugstange ist, die sich durch den freien Hohlraum des inneren Stützkörpers von einen Ende der Filterkerze zum anderen Ende erstreckt.

12. Kunststoff verarbeitende Maschine oder Vorrichtung, mit
- einem Gehäuse, und
- einem Strömungspfad für eine innerhalb des Gehäuses strömende Kunststoffschmelze, **dadurch gekennzeichnet, dass** im Strömungspfad eine rückspülbare Filterkerze (1, 1', 1", 1‴) nach einem der Ansprüche 1 bis 11 angeordnet ist.

13. Verwendung einer rückspülbaren Filterkerze (1, 1', 1", 1‴) nach einem der Ansprüche 1 bis 11 zum Abscheiden von Verunreinigungen aus einer Kunststoffschmelze in einer kunststoffverarbeitenden Maschine oder Vorrichtung.

## Revendications

1. Bougie filtrante (1, 1', 1", 1‴) pour séparer des contaminants d'une matière plastique fondue, présentant
- au moins un élément filtrant (6, 6', 6") à travers lequel un flux de matière fondue peut être dirigé et qui est installé pour retenir des contaminants contenus dans le flux de matière fondue, et
- un corps de support (2, 2', 2") pour supporter l'élément filtrant (6, 6', 6''), sous la forme d'un corps creux qui possède une région de paroi présentant de multiples passages pour le flux de matière fondue, et
- au moins un corps de support supplémentaire (4, 4', 4'') est associé à l'élément filtrant (6, 6', 6'') sur le côté dudit élément filtrant qui est tourné à l'opposé du corps de support (2, 2', 2"), lequel corps de support (4, 4', 4") est installé pour agir sur des régions de surface de l'élément filtrant (6, 6', 6'') et/ou pour recevoir celles-ci de telle sorte que l'élément filtrant (6, 6', 6") est configuré pour être lavé à contre-courant via le flux de matière fondue s'écoulant à l'encontre de la direction de filtration habituelle,
dans laquelle le corps de support (2, 2', 2") est un corps de support interne, et l'au moins un corps de support supplémentaire (4, 4', 4") est un corps de support externe, avec des passages (10, 10') pour le flux de matière fondue,
dans laquelle, durant le processus de filtration, ladite matière fondue en plastique s'écoule dans une direction d'écoulement dirigée de manière sensiblement radiale (30) depuis l'extérieur par les passages (10, 10') dans le corps de support externe (4, 4', 4'') à travers l'élément filtrant (6) et par des passages (10, 10') du corps de support interne (2, 2', 2") et durant le processus de lavage à contre-courant, la matière fondue en plastique s'écoule dans des directions opposées aux directions d'écoulement afin de nettoyer l'élément filtrant (6),
**caractérisée en ce que** le corps de support interne (2, 2', 2'') ou l'au moins un corps de support externe (4, 4', 4'') présente une partie de butée (20, 20') pour l'autre corps de support respectif pour un alignement longitudinal des corps de support (2, 2', 2", 4, 4', 4") l'un vis-à-vis de l'autre,
dans laquelle une bague de serrage (22) et une partie de fixation (24, 24') avec un filetage sont prévues, ladite partie de fixation entrant en interaction avec ladite bague de serrage, dans laquelle la partie de fixation (24, 24') est reçue sur l'un des corps de support (2, 2', 2", 4, 4', 4") d'une manière vissée et est installée pour immobiliser l'autre corps de support (2, 2', 2'', 4, 4', 4'') respectif sur l'un corps de support,
dans laquelle l'élément filtrant, avec ses surfaces tournées à l'opposé les unes des autres, repose sur le corps de support interne (2, 2', 2") ou l'au moins un corps de support externe (4, 4', 4").

2. Bougie filtrante selon la revendication 1,
**caractérisée en ce que** le corps de support externe (4, 4', 4") est conçu en tant que corps creux présentant des passages dans une région de paroi, dans laquelle le corps de support interne (2, 2', 2'') et l'élément filtrant (6, 6', 6'') sont agencés dans la cavité du corps de support externe (4, 4', 4").

3. Bougie filtrante selon la revendication 1 ou 2,
**caractérisée en ce que** le corps de support externe (4, 4', 4'') est conçu de façon similaire au corps de support interne (2, 2', 2"), dans laquelle le corps de support interne présente de préférence une forme externe cylindrique et le corps de support externe (4, 4', 4'') présente de préférence une forme interne cylindrique, dans laquelle l'élément filtrant (6, 6', 6'') est agencé dans un espace entre les corps de support interne et externe (2, 2', 2", 4, 4', 4").

4. Bougie filtrante selon au moins une des revendications 1 à 3,
**caractérisée en ce que** les corps de support interne et externe (2, 2', 2'', 4, 4', 4'') sont agencés de manière coaxiale.

5. Bougie filtrante selon au moins une des revendications 1 à 4,
**caractérisée en ce que** les corps de support interne et externe présentent une forme externe ou interne, choisie à partir du groupe constitué de formes polygonales ou en étoile.

6. Bougie filtrante selon au moins une des revendications 1 à 5,
**caractérisée en ce que** l'élément filtrant (6, 6', 6") présente essentiellement la forme d'un corps tubulaire, dans laquelle l'élément filtrant (6') est de préférence plissé dans la direction circonférentielle.

7. Bougie filtrante selon la revendication 6,
**caractérisée en ce que** le corps de support interne (2, 2', 2'') sur sa surface de paroi externe tournée vers l'élément filtrant (6'), et/ou le corps de support externe (4, 4', 4'') sur sa surface de paroi interne tournée vers l'élément filtrant (6'), présente des éléments de blocage s'étendant entre les plis de l'élément filtrant (6) plissé.

8. Bougie filtrante selon au moins une des revendications 1 à 7,
**caractérisée en ce que** les corps de support interne et externe (2", 4") sont plissés dans la direction circonférentielle, dans laquelle l'élément filtrant (6'') est agencé dans un espace ondulé entre les corps de support (2", 4").

9. Bougie filtrante selon au moins une des revendications 1 à 3,
**caractérisée en ce que** les corps de support interne et externe (2, 2', 2'', 4, 4', 4'') sont couplés l'un à l'autre via un raccordement amovible réversible, et l'élément filtrant (6, 6', 6'') est conçu pour être échangeable.

10. Bougie filtrante selon l'une quelconque des revendications 1 à 9,
**caractérisée en ce que** la partie de fixation présente un segment conique (26, 26') qui fait saillie dans l'espace interne libre du corps de support interne (2, 2', 2"), dans laquelle le segment conique (26, 26') s'étend de préférence sur au moins approximativement ¼ de la longueur du corps de support interne (2, 2', 2") depuis une extrémité dans la cavité libre (28).

11. Bougie filtrante selon l'une quelconque des revendications 1 à 10,
**caractérisée en ce que** la partie de fixation est une tige de traction qui s'étend à travers la cavité libre du corps de support interne d'une extrémité de la bougie filtrante à l'autre.

12. Machine ou dispositif de transformation de plastique, possédant
- un boîtier et
- un chemin d'écoulement pour une matière fondue en plastique s'écoulant dans le boîtier, **caractérisé en ce qu'**une bougie filtrante pouvant être lavée à contre-courant (1, 1', 1'', 1‴) selon l'une quelconque des revendications 1 à 11 est agencée dans le chemin d'écoulement.

13. Utilisation d'une bougie filtrante pouvant être lavée à contre-courant (1, 1', 1", 1‴) selon l'une quelconque des revendications 1 à 11 pour séparer des contaminants d'une matière fondue en plastique dans une machine ou un dispositif de transformation de plastique.
